# EUROPEAN PATENT SPECIFICATION

(11) **EP 3 599 355 B1**
(45) Date of publication and mention of the grant of the patent: **24.02.2021**
(21) Application number: 19188248.9
(22) Date of filing: 25.07.2019
(51) Int. Cl.: F01P 5/12, F04D 13/02, F04D 13/06, F01P 7/16, F16D 27/112, F16D 21/02

(54) **PUMP ASSEMBLY FOR RECIRCULATING A COOLING FLUID OF A HEAT ENGINE**
PUMPVORRICHTUNG ZUM ZIRKULIEREN VON KÜHLMITTEL EINES VERBRENNUNGSMOTORS
ENSEMBLE POMPE POUR FAIRE CIRCULER DU FLUIDE DE REFROIDISSEMENT D'UN MOTEUR À COMBUSTION

(30) Priority: 25.07.2018 IT 201800007497
(43) Date of publication of application: 29.01.2020
(73) Proprietor: FPT Industrial S.p.A., 10156 Torino (IT)
(72) Inventor: MODICA, Massimiliano, 10036 Settimo Torinese (TO) (IT)
(74) Representative: Bongiovanni, Simone

(56) References cited:
- WO-A2-2012/142016
- DE-A1- 10 214 637
- DE-A1- 19 801 160
- US-A1- 2005 207 915
- US-A1- 2015 037 177

## Description

### Field of the invention

The object of the present invention is a pump for recirculating the cooling fluid of a heat engine, particularly of vehicles, with a friction control device having an electromagnetic, pneumatic, hydraulic actuation and an electric motor integrated in the pump body.

### State of the art

In the field of production of heat engines, it is already known the need to cool them by recirculating a cooling fluid, moved by a corresponding recirculation pump whose impeller is rotated by a shaft driven by a pulley and by a belt connected to the crankshaft of the same heat engine. It is also known that the recirculation of the cooling fluid must be carried out with a flow rate corresponding to the actual cooling need, determined by the actual conditions of use of the engine and by the outside temperature, in order to avoid a constant and unnecessary rotation at full speed of devices that absorb useful power, thus increasing the wear of the various parts of the components and the vehicle consumption.

It is also known that a proposal to solve this problem provides control devices for the shaft of the impeller of the pump whose rotation depends on the engagement of a friction clutch for the transmission of a rotational motion dependent on the revolutions of the crankshaft, and on an electric motor that operates with a disengaged clutch for a rotation with controlled revolutions independent of the crankshaft. Therefore, it is known that the control of the operation of the pump by means of the electric motor allows a greater versatility in response to the different cooling requirements, whereas the operation by means of the clutch, with power take-off from the shaft of the heat engine, depends on the number of rotations, rpm, of the motor, therefore not being able to provide an appropriate cooling, for example, due to the switching off of the engine or with low engine revs.

Examples of such devices are known for example from DE10214637A1, WO2012142065A2, DE19801160A1, US2015037177A1. As conceived, these devices are configured to connect to the shaft of the circulation pump the pulley rotated by the crankshaft or the electric motor integrated in the pump, through a generally magnetically operated clutch.

Generally, other users are also connected on the same belt revolution or on different belt revolutions, such as the hydroguide pump, the air conditioning system compressor and the alternator, which allows recharging the vehicle batteries necessary to start the heat engine.

The alternator has recently been subject to improvements. BRM is the Anglo-Saxon acronym of "Boost recovery machines", also known as "Boost recuperation system" (as defined by Bosch Inc). According to the BRM concept, an electric machine with recently developed integrated electronic power components replaces the conventional motor/alternator starter. Sometimes, the BRM is characterized by a dual voltage structure with 48 V alongside the conventional 12 or 24 V low voltage vehicle electrical system. This system structure has allowed the creation of vehicles called "light hybrids", since the electric motor is at least able to keep the on-board services active when the vehicle is downhill and the heat engine is off, producing zero emissions, and is able to perform regenerative brakings, namely in which the kinetic energy of the vehicle is converted into electrical energy, stored in special batteries.

The BRM is always connected to the crankshaft by a belt.

It is believed that the current situation can be improved. If not specifically excluded in the following detailed description, what described in the present paragraph is to be considered as an integral part of the detailed description.

### Summary of the invention

The object of the present invention is to improve the current situation by introducing a pump assembly that allows implementing additional functions with respect to the cooling of the heat engine with which the pump assembly is associated.

The basic idea of the present invention according to claim 1 is to implement a pump assembly equipped with a hydraulic pump, a pulley and an electric motor, adapted to be interconnected to have a first operating condition in which the electric motor is operatively connected to the pump (or to the relative shaft), whereas the pulley is disconnected from the pump and the electric motor controls the cooling of the heat engine independently of a relative speed of rotation of the crankshaft, and to have a second operating condition in which the pulley, the pump and the electric motor are operatively connected to each other so that the electric motor generates electrical energy by absorbing mechanical energy from the belt or so that the electric motor supplements the heat engine by supplying mechanical energy to the belt.

The electric motor is connected to the pump shaft by means of a planetary gear train configured to make a reduction of at least 3:1 between the electric motor and the pump shaft. Advantageously, during the generation of electrical energy, the electric motor is thrust at a speed of rotation three times greater than the speed of rotation of the pump. This allows the electric motor to work in a more favourable condition of efficiency.

A first electromagnetic clutch is provided to allow the connection of the pulley with the pump.

Preferably, the pump assembly object of the present invention comprises a second electromagnetic clutch adapted to make the sun gear or the crown wheel of the planetary gear train idle by operationally disconnecting the rotor of the electric motor from the pump.

Preferably, the rotor of the electric motor is configured in the form of a sleeve, coaxially put on the pump shaft, without contact or by means of a bearing assembly, and defines the pinion/sun gear of the planetary gear train. The planetary-carrier cage of the planetary gear train is made in one piece with the pump shaft and supports the planet gears meshing on the sun gear internally and on the crown wheel externally. The second clutch makes the crown wheel integral or idle with a fixed point of the pump assembly based on its respective condition of engagement or disengagement.

Advantageously, when the second electromagnetic clutch is disengaged, the crown wheel is idle and therefore forms a rotating mass together with the planet gears, while the rotor of the electric motor is disconnected.

When the vehicle proceeds downhill, the clutches can be controlled so that the cooling of the internal combustion engine is ensured by the pump assembly object of the present invention, whereas the heat engine is turned off and disconnected from the transmission.

When the vehicle makes a regenerative braking, the internal combustion engine is connected to the transmission and the electric motor of the pump assembly object of the present invention is operatively connected to the pulley. Therefore, the kinetic energy of the vehicle transmitted to the internal combustion engine is converted into electrical energy by the electric motor of the pump assembly.

The dependent claims describe preferred variants of the invention, forming an integral part of the present description.

### Brief description of the figures

Further aims and advantages of the present invention will become clear from the following detailed description of an embodiment of the same (and of its variants) and from the annexed drawings given purely as an explanatory and nonlimiting example, in which:
- Figure 1 schematically shows a pump assembly according to the present invention; and
- Figure 2 shows a variant of the pump assembly according to the present invention.

The same reference numbers and the same reference letters in the figures identify the same elements or components.

In the present description, the term "second" component does not necessarily imply the presence of a "first" component. These terms are in fact used as labels for clarity's sake and should not be meant in a limiting way. The elements and characteristics shown in the various preferred embodiments, including the drawings, can be combined with each other without, however, departing from the scope of protection of the present application as described below.

### Detailed description of embodiments

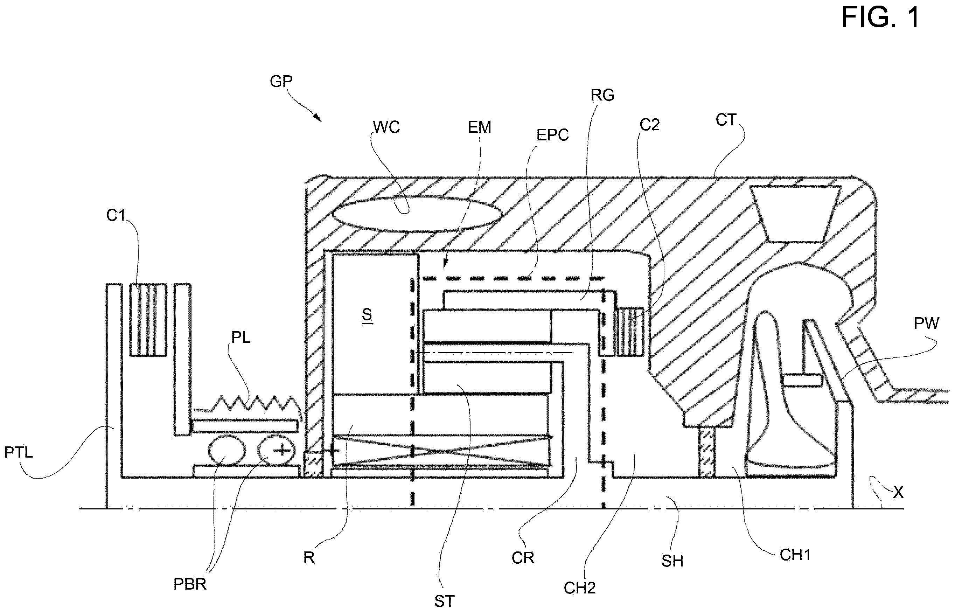

With reference to Figure 1, the pump assembly GP comprises a pump body CT defined by a crankcase having two mutually separate chambers CH1 and CH2.

The impeller of the pump PW is housed in the first chamber CH1, whereas an electric motor EM comprising a stator S and a rotor R is housed in the second chamber CH2.

The second chamber further contains a planetary gear train EPC, preferably with parallel axes, which allows the rotor R of the electric motor EM to interact with the pump shaft SH with a predetermined transmission ratio, which is preferably 3:1.

The gearing EPC has parallel axes since the rotation axis Y of the planet gear is parallel to the pump axis X.

The pump shaft SH is made in one piece with the pump impeller PW and with the cage or carrier CR, which carries the planet gears ST.

The electric motor can have a radial flow like the one shown in Figure 1, and the relative rotor R defines a pinion with radial cogs as a sun gear for the planetary gear train EPC.

In other words, the rotor R comprises the aforesaid pinion and a rotor portion adapted to magnetically cooperate with the stator S. The pinion is fixed and coaxial with respect to the rotor portion.

A crown wheel RG is arranged coaxially with the sun gear and one or more planet gears ST mesh simultaneously with the sun gear and the crown wheel.

A second clutch C2, preferably electromagnetic, is adapted to make the crown wheel fixed with the crankcase CT of the pump assembly.

When the crown wheel is blocked, the pinion and the pump shaft are interconnected through the aforementioned planetary gear train EPC.

Although the solution of Figure 1 is the preferred one, it is also possible to provide a configuration with an axial-flow electric motor, whose rotor is preferably provided with front cogs and the planetary gear train has perpendicular axes, since the axes of rotation of the planet gears Y are perpendicular to the axis of rotation of the sun gear.

In any case, the rotor of the electric motor is hollow and configured as a sleeve mounted on the pump shaft SH.

The pump shaft, at a first end, is made in one piece with the pump impeller PW, whereas at a second end opposite the first it supports a pulley PL through one or more annular bearings PRB. The pulley PL and the pump shaft can be connected or disconnected to each other by means of a first clutch C1, depending on the conditions of use of the pump assembly.

Preferably, the second end of the pump shaft is made in one piece with, or includes, a plate PTL perpendicular to the shaft SH. An electromagnetic clutch defines said first clutch C1, making the pulley integral or idle with respect to the aforementioned plate PTL.

Figure 1 shows only a portion of the pump assembly GP of the present invention. Although the crankcase CT could not be symmetrical with respect to the axis X identified by the shaft SH, the planetary gear train EPC, the SH/PW pump, the electric motor EM and the pulley are coaxially arranged and have a rotation symmetry according to said axis X.

Since the first chamber CH1 of the pump is intended to communicate with the cooling circuit of an internal combustion engine for which the pump assembly is intended, some water in the cooling circuit can be sent to cool the electric motor EM through suitable channels WC formed in the crankcase.

Advantageously, the electric motor can withstand significant energy flows, both when it supplements the internal combustion engine and when it makes a regenerative braking, since it adapted tocan be cooled directly by the cooling fluid of the internal combustion engine. In contrast, the BRMs that replace the internal combustion engine's electric generator are air-cooled.

The present invention further relates to a terrestrial vehicle according to claim 8, of both road and off-road type, equipped with an internal combustion engine and a with pump assembly GP operatively associated with said internal combustion engine.

A "motor point" is a point identified by a supplied torque and by a speed of rotation of the internal combustion engine.

When the motor point is in predetermined operating zones, for example the speed is high but the delivered torque is low, the heat to be dissipated is limited. Therefore, the pump can be driven at lower speed with respect to the speed of rotation imposed by the crankshaft by means of the aforesaid pulley PL.

Therefore, the first clutch is disconnected and the second clutch is inserted, while the electric motor EM guides the pump into rotation to obtain a predetermined flow rate of cooling fluid.

Analogously, when the internal combustion engine is kept at low speed but with a high load, the speed of rotation of the pump can be considered insufficient to dissipate the heat developed in the internal combustion engine and therefore the first clutch is open and the second clutch is inserted so that the electric motor EM guides the pump into rotation to obtain a predetermined flow rate of cooling fluid.

It may also happen that, due to the thermal inertia of the components of the engine, the sudden shutdown of the same can bring to the boiling of the water contained in the head. Therefore, with the internal combustion engine off, it may be useful to start the pump to obtain a minimum circulation of cooling fluid.

When the engine is cold and a rapid heating is wished, both clutches can be opened, thus obtaining the stop of the pump. This is particularly advantageous in that it allows eliminating the thermostatic valve from the cooling circuit of the internal combustion engine.

When the vehicle is downhill and the internal combustion engine is connected to the transmission, the closing of both clutches can be controlled and the electric motor acts as a generator, helping to brake the vehicle. Conversely, when the vehicle is uphill or starts at full load, both clutches can be closed and the electric motor is controlled as an engine to supplement the internal combustion engine.

The control of the clutches can be carried out by the vehicle processing unit VHE, which supervises the operating conditions of the vehicle by controlling, for example, the starting and stopping of the internal combustion engine (Start & Stop) and in general the light hybrid functions known per se.

According to a further preferred variant of the invention, a solenoid valve (not shown) controls the flow rate of cooling fluid in the aforementioned circulation channels WC formed in the crankcase CT to cool the electric motor EM. In particular, when both clutches are closed, exceeding a predetermined electric flow that passes through the electric motor, the solenoid valve is controlled to increase the flow of cooling fluid inside the aforementioned channels WC.

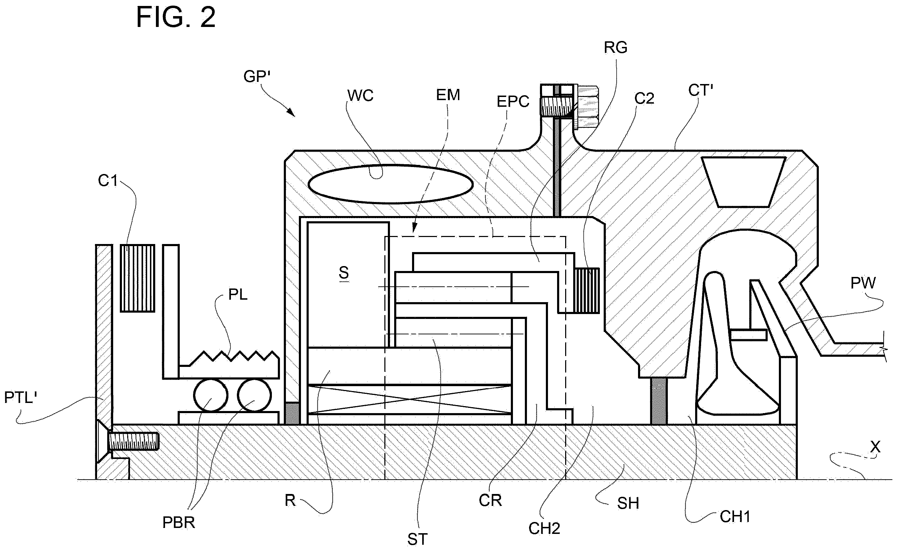

Figure 2 shows a pump assembly GP'. The pump assembly GP' is similar to the pump assembly GP and will therefore be described only for what distinguishes it from the pump assembly GP. The components of the pump assembly GP', identical to those of the pump assembly GP, will be indicated, where possible, by the same reference symbols.

In particular, the pump assembly GP' has, instead of the schematic pump body CT, a better specified pump body CT' defined by two semi-shells axially connected together by means of threaded elements, only one of which is shown in Figure 2.

Furthermore, preferably, the second end of the pump shaft comprises a plate PTL' perpendicular to the shaft SH and connected to this latter by means of threaded elements, only one of which is shown in Figure 2.

The present invention can be advantageously carried out by means of a computer program, which comprises coding means for the execution of one or more steps of the method, when this program is run on a computer.

The configurations of the planetary gear train can be different with respect to the shown embodiment. In particular, the rotor R could be associated with the crown wheel RG and, at the same time, the clutch C2 is associated with the pinion or sun gear of the planetary gear train.

From the description given above, the person skilled in the art is able to manufacture the object of the invention without introducing further construction details.

## Claims

1. A pump assembly (GP) for recirculating a cooling fluid of a heat engine, comprising:
- a pump body (CT), an impeller (PW) carried by a driven shaft (SH), adapted to be associated with a cooling circuit of the heat engine;
- a pulley (PL) adapted to be dragged into rotation by the heat engine,
- a first friction reversible clutch (C1), adapted to connect/disconnect said pulley to/from said driven shaft (SH),
- an electric motor (EM) associated with said driven shaft (SH) for guiding the impeller (PW) into rotation, **characterised in that** it comprises
- a planetary gear train (EPC) having a first inlet or outlet (R) operatively associated with said electric motor (EM), a second inlet or outlet (CR) associated with said driven shaft (SH) and a third outlet (RG), and
- a second friction reversible clutch (C2), independent of said first reversible clutch (C1), adapted to block said third outlet with respect to said pump body (CT) .

2. A pump assembly (GP) according to claim 1, wherein said planetary gear train has parallel axes (X, Y) and said electric motor has a radial flow, or said planetary gear train has perpendicular axes and said electric motor has an axial flow.

3. A pump assembly (GP) according to claim 2, wherein when the planetary gear train has parallel axes, a sun gear and a crown wheel of said planetary gear train have radial cogs; if the planetary gear train has perpendicular axes, said sun gear and said crown wheel have front cogs.

4. A pump assembly (GP) according to any one of the claims 1 to 3, wherein a rotor (R) of said electric motor defines a sun gear of said planetary gear train defining said first inlet or outlet, said third outlet is defined by a crown wheel (RG) of said planetary gear train and said second inlet or outlet consists in a planetary-carrier cage (CR) integral with said driven shaft (SH).

5. A pump assembly (GP) according to claim 4, wherein said rotor (R) is designed as a sleeve fitted on said driven shaft (SH) in coaxial position.

6. A pump assembly (GP) according to any one of the preceding claims, wherein said pump body comprises one or more circulation channels (WC) of the cooling fluid of said heat engine arranged to cool said electric motor.

7. A pump assembly (GP) according to claim 6, further comprising a solenoid valve adapted to control a flow of said cooling fluid in said one or more circulation channels.

8. A terrestrial vehicle comprising a heat engine provided with a crankshaft, a pump assembly (GP), according to any one of the preceding claims, associated with a relative cooling circuit and to a belt operatively connecting said crankshaft to said pulley (PL).

9. The vehicle according to claim 8, provided with processing means configured to control at least said first and second reversible clutches (C1, C2) in order to carry out at least:
- a third operating condition, wherein the closing of both said clutches is controlled and wherein the generation of electrical energy by means of said electric motor is controlled, and/or
- a fourth operating condition, wherein the closing of both said clutches is controlled and wherein said heat engine is controlled to supplement said electric motor.

10. The vehicle according to claim 9, wherein said processing means are configured to control at least said first and said second reversible clutches (C1, C2) in order to carry out
- a first operating condition, wherein the opening of both said clutches is controlled, the heat engine is active and cold and a rapid heating of the heat engine can occur;
- a second operating condition, wherein the opening of said first clutch is controlled and the closing of said second clutch is controlled, wherein said electric motor is active and controlled to provide a predetermined flowrate of cooling fluid to said heat engine.

11. The vehicle according to claim 9 or 10, wherein said processing means are further configured to control said solenoid valve in order to increase a flow of cooling fluid through said one or more cooling channels (WC) when an electric flow passing through said electric motor exceeds a predetermined threshold.

## Patentansprüche

1. Pumpvorrichtung (GP) zum Zirkulieren eines Kühlfluids eines Verbrennungsmotors, umfassend:
- einen Pumpenkorpus (CT), ein Flügelrad (PW), das von einer angetriebenen Welle (SH) getragen wird, ausgebildet, um mit einem Kühlkreislauf des Verbrennungsmotors verbunden zu werden;
- eine Riemenscheibe (PL), dazu vorgesehen, um durch den Verbrennungsmotor in Drehung versetzt zu werden;
- eine erste reversible Reibungskupplung (C1), dazu vorgesehen, die Riemenscheibe mit der angetriebenen Welle (SH) zu verbinden oder von dieser zu trennen;
- einen Elektromotor (EM), der mit der angetriebenen Welle (SH) verbunden ist, um das Flügelrad (PW) in Drehung zu versetzen,
**dadurch gekennzeichnet, dass** die Pumpvorrichtung umfasst:
- einen Planetengetriebezug (EPC), mit einem ersten Einlass oder Auslass (R), der mit dem Elektromotor (EM) wirkverbunden ist, einem zweiten Einlass oder Auslass (CR), der mit der angetriebenen Welle (SH) und einem dritten Auslass (RG) verbunden ist, und
- eine zweite reversible Reibungskupplung (C2), unabhängig von der ersten reversiblen Kupplung (C1), dazu vorgesehen, den dritten Auslass bezüglich des Pumpenkorpus (CT) zu blockieren.

2. Pumpvorrichtung (GP) gemäß Anspruch 1, bei welcher der Planetengetriebezug parallele Achsen (X,Y) aufweist und der Elektromotor einen radialen Strom aufweist, oder der Planetengetriebezug senkrechte Achsen aufweist und der Elektromotor einen axialen Strom aufweist.

3. Pumpvorrichtung (GP) gemäß Anspruch 2, bei welcher in dem Fall, in welchem der Planetengetriebezug parallele Achsen aufweist, ein Sonnenrad und ein Kronrad des Planetengetriebezugs radiale Zähne aufweisen, und in dem Fall, in welchem der Planetengetriebezug senkrechte Achsen aufweist, das Sonnenrad um das Kronrad Frontalzähne aufweisen.

4. Pumpvorrichtung (GP) gemäß einem der Ansprüche 1 bis 3, bei welchem ein Rotor (R) des Elektromotors ein Sonnenrad des Planetengetriebezugs festlegt, welches den ersten Einlass oder Auslass definiert, der dritte Auslass durch ein Kronrad (RG) des Planetengetriebezugs definiert wird, und der zweite Einlass oder Auslass in einem Planetenträgerkäfig (CR) vorhanden ist, der einteilig mit der angetriebenen Welle (SH) gebildet ist.

5. Pumpvorrichtung (GP) gemäß Anspruch 4, bei welcher der Rotor (R) als eine Hülse gebildet ist, die auf die angetriebene Welle (SH) in einer koaxialen Position aufgepasst ist.

6. Pumpvorrichtung (GP) gemäß einem der vorhergehenden Ansprüche, bei welcher der Pumpenkorpus einen oder mehrere Zirkulationskanäle (WC) des Kühlfluids des Verbrennungsmotors umfasst, die dazu angeordnet sind, den Elektromotor zu kühlen.

7. Pumpvorrichtung (GP) gemäß Anspruch 6, ferner umfassend ein Magnetventil, vorgesehen zur Steuerung eines Stroms des Kühlfluids in den einen oder die mehreren Zirkulationskanäle.

8. Landfahrzeug, umfassend einen Verbrennungsmotor mit einer Kurbelwelle, einer Pumpvorrichtung (GP) gemäß einem der vorhergehenden Ansprüche, die mit einem entsprechenden Kühlkreislauf verbunden ist, und mit einem Riemen, der die Kurbelwelle mit der Riemenscheibe (PL) wirkverbindet.

9. Fahrzeug gemäß Anspruch 8, versehen mit Verarbeitungsmitteln, ausgebildet zur Steuerung zumindest der ersten und zweiten reversiblen Kupplungen (C1,C2), zur Ausführung zumindest der folgenden Betriebszustände:
- eines dritten Betriebszustands, in welchem das Schließen beider dieser Kupplungen gesteuert wird und in welchem die Erzeugung elektrischer Energie durch den Elektromotor gesteuert wird, und/oder
- einen vierten Betriebszustand, in welchem das Schließen beider dieser Kupplungen gesteuert wird, und in welchem der Verbrennungsmotor zur Ergänzung des Elektromotors gesteuert wird.

10. Fahrzeug gemäß Anspruch 9, bei welchem die Verarbeitungsmittel zur Steuerung zumindest der ersten und der zweiten reversiblen Kupplungen (C1,C2) ausgebildet sind, zur Ausführung der folgenden Betriebszustände:
- eines ersten Betriebszustands, in welchem das Öffnen beider dieser Kupplungen gesteuert wird, und der Verbrennungsmotor aktiv und kalt ist und ein schnelles Aufheizen des Verbrennungsmotors auftreten kann;
- einen zweiten Betriebszustand, in welchem das Öffnen der ersten Kupplung gesteuert wird und das Schließen der zweiten Kupplung gesteuert wird, und in welchem der Elektromotor aktiv ist und dazu gesteuert ist, einen vorbestimmten Strömungsdurchsatz von Kühlfluid zum Verbrennungsmotor zu liefern.

11. Fahrzeug gemäß Anspruch 9 oder 10, bei welchem die Verarbeitungsmittel ferner dazu vorgesehen sind, das Magnetventil zu steuern, um einen Strom von Kühlfluid durch den einen oder mehrere Kühlkanäle (WC) zu vergrößern, wenn ein elektrischer Strom, der durch den Elektromotor strömt, eine vorbestimmte Schwelle überschreitet.

## Revendications

1. Ensemble de pompe (GP) pour la recirculation d'un fluide de refroidissement d'un moteur thermique, comprenant :
- un corps de pompe (CT), un impulseur (PW) porté par un arbre entraîné (SH), adapté pour être associé à un circuit de refroidissement du moteur thermique ;
- une poulie (PL) adaptée pour être entraînée en rotation par le moteur thermique,
- un premier embrayage réversible (C1 à friction, adapté pour connecter/déconnecter ladite poulie audit/dudit arbre entraîné (SH).
- un moteur électrique (EM) associé audit arbre entraîné (SH) pour guider l'impulseur (PW) en rotation, **caractérisé en ce qu'**il comprend
- un train d'engrenages planétaires (EPC) ayant une première entrée ou sortie (R) associée fonctionnellement audit moteur électrique (EM), une deuxième entrée ou sortie (CR) associée audit arbre entraîné (SH) et une troisième sortie (RG), et
- un deuxième embrayage réversible (C2) à friction, indépendant dudit premier embrayage réversible (C1), adapté pour bloquer ladite troisième sortie par rapport audit corps de pompe (CT).

2. Ensemble de pompe (GP) selon la revendication 1, dans lequel ledit train d'engrenages planétaires a des axes parallèles (X, Y) et ledit moteur électrique a un flux radial, ou ledit train d'engrenages planétaires a des axes perpendiculaires et ledit moteur électrique a un flux axial.

3. Ensemble de pompe (GP) selon la revendication 2, dans lequel, lorsque le train d'engrenages planétaires a des axes parallèles, un engrenage solaire et une roue couronne dudit train d'engrenages planétaires ont des dents radiales ;
si le train d'engrenages planétaires a des axes perpendiculaires, ledit engrenage solaire et ladite roue plate ont des dents avant.

4. Ensemble de pompe (GP) selon l'une quelconque des revendications 1 à 3, dans lequel un rotor (R) dudit moteur électrique définit un engrenage solaire dudit train d'engrenages planétaires définissant ladite première entrée ou sortie, ladite troisième sortie est définie par une roue couronne (RG) dudit train d'engrenages planétaires et ladite deuxième entrée ou sortie consiste en une cage de support planétaire (CR) solidaire dudit arbre entraîné (SH).

5. Ensemble de pompe (GP) selon la revendication 4, dans lequel ledit rotor (R) est conçu comme un manchon ajusté sur ledit arbre entraîné (SH) en position coaxiale.

6. Ensemble de pompe (GP) selon l'une quelconque des revendications précédentes, dans lequel ledit corps de pompe comprend un ou plusieurs canaux de circulation (WC) du fluide de refroidissement dudit moteur thermique, agencés pour refroidir ledit moteur électrique.

7. Ensemble de pompe (GP) selon la revendication 6, comprenant en outre une électrovanne adaptée pour commander un flux dudit fluide de refroidissement dans lesdits un ou plusieurs canaux de circulation.

8. Véhicule terrestre comprenant un moteur thermique pourvu d'un vilebrequin, un ensemble de pompe (GP), selon l'une quelconque des revendications précédentes, associés à un circuit de refroidissement relatif et à une courroie connectant fonctionnellement ledit vilebrequin à ladite poulie (PL).

9. Véhicule selon la revendication 8, pourvu de moyens de traitement configurés pour commander au moins lesdits premier et deuxième embrayages réversibles (C1, C2) afin d'effectuer au moins :
- une troisième condition de fonctionnement dans laquelle la fermeture desdits deux embrayages est commandée, et dans laquelle la génération d'énergie électrique au moyen dudit moteur électrique est commandée, et/ou
- une quatrième condition de fonctionnement, dans laquelle la fermeture desdits deux embrayages est commandée, et dans laquelle ledit moteur thermique est commandé pour compléter ledit moteur électrique.

10. Véhicule selon la revendication 9, dans lequel lesdits moyens de traitement sont configurés pour commander au moins lesdits premier et deuxième embrayages réversibles (C1, C2) afin d'effectuer
- une première condition de fonctionnement dans laquelle l'ouverture desdits deux embrayages est commandée, le moteur thermique est actif et froid et un réchauffement rapide du moteur thermique peut se produire ;
- une deuxième condition de fonctionnement dans laquelle l'ouverture dudit premier embrayage est commandée, et la fermeture dudit deuxième embrayage est commandée, dans laquelle ledit moteur électrique est actif et commandé pour fournir un débit prédéterminé d'un fluide de refroidissement audit moteur thermique.

11. Véhicule selon la revendication 9 ou 10, dans lequel lesdits moyens de traitement sont en outre configurés pour commander ladite électrovanne afin d'augmenter un flux de fluide de refroidissement à travers lesdits un ou plusieurs canaux de refroidissement (WC) lorsqu'un flux électrique passant à travers ledit moteur électrique dépasse un seuil prédéterminé.
